# EUROPEAN PATENT APPLICATION

(11) **EP 2 727 644 A1**
(43) Date of publication of application: **07.05.2014**
(21) Application number: 12803970.8
(22) Date of filing: 27.06.2012
(51) Int. Cl.: B01D 65/02, B01D 61/04, B01D 61/08, B01D 61/14, B01D 61/58, C02F 1/44

(54) **MEMBRANE FILTRATION METHOD AND MEMBRANE FILTRATION DEVICE**

(30) Priority: 29.06.2011 JP 2011143849
(71) Applicant: Toray Industries, Inc., Tokyo 103-8666 (JP)
(72) Inventor: MORIKAWA, Hirofumi, 1-1, Sonoyama 1-chome, Otsu-shi Shiga 5208558 (JP); TOMIOKA, Kazunori, 1-1, Sonoyama 1-chome, Otsu-shi Shiga 5208558 (JP); MAEDA, Tomohiro, 1-1, Sonoyama 1-chome, Otsu-shi Shiga 5208558 (JP)
(74) Representative: Hoefer & Partner
(86) International application number: PCT/JP2012/066340
(87) International publication number: WO 2013/002244

(57) **Abstract**

A membrane filtration method and membrane filtration device comprising: a pre-treatment membrane module that filters raw water with a filtration membrane and obtains pre-treated water; a reverse osmosis membrane module that filters the pre-treated water obtained from the pre-treatment membrane module with a reverse osmosis membrane and obtains permeate and retentate; a communicating tube channel that directly joins the pre-treated water outlet of the pre-treatment membrane module and the pre-treated water inlet of the reverse osmosis membrane module; and a branch tube channel that branches from the communicating tube channel and diverts a portion of the pre-treated water flowing in the communicating tube channel from the communicating tube channel. The filtration membrane of the pre-treatment membrane module is backwashed using the pre-treated water that has been diverted by the branch tube channel.

## Description

### Technical Field

The present invention relates to a membrane filtration method and a membrane filtration device in which pretreated water which is obtained by filtrating raw water with a pretreatment membrane module having a filtration membrane is further treated by a reverse osmosis membrane module having a reverse osmosis membrane to separate permeated water and concentrated water.

More specifically, the invention relates to a membrane filtration method and a membrane filtration device using a water treatment system comprising a pretreatment membrane module having a filtration membrane such as a microfiltration membrane, an ultrafiltration membrane, or both of these filtration membranes for obtaining pretreated water and a reverse osmosis membrane module having a reverse osmosis membrane for filtering the pretreated water obtained in the pretreatment membrane module to obtain permeated water and concentrated water wherein these modules are connected by pipe lines in a specific relationship so that backwash of the pretreatment membrane module requiring backwash of the filtration membrane can be conducted by the pretreated water flowing in the pipe line.

### Background Art

Membrane filtration methods using a microfiltration membrane or an ultrafiltration membrane are finding wider use in various fields because of the reduced energy, reduced space, labor saving, improved quality of the filtrate, and other features. Membrane filtration methods using a microfiltration membrane or an ultrafiltration membrane are used, for example, in the cleaning of water for producing industrial water or tap water from river water, underground water, or treated sewage waste water, and also, in the pretreatment of raw water before conducting the filtration of sewage or waste water by a reverse osmosis membrane module or desalination by a reverse osmosis membrane.

In the conventional method, the permeated water (this water may also be simply referred to as the "pretreated water") which has permeated through a microfiltration membrane or an ultrafiltration membrane (these membranes may also be simply referred to as "pretreatment membrane") has been temporarily stored in the raw water tank for the reverse osmosis membrane module, and this pretreated water temporarily stored in this tank has been supplied to the reverse osmosis membrane module by using a booster pump, for example, as shown in Fig. 4 of Patent Document 1 or Fig. 2 of Patent Document 2. This method, however, had the drawback that microorganisms are likely to be incubated in the pretreated water stored in the raw water tank for the reverse osmosis membrane module, and the reverse osmosis membrane in the reverse osmosis membrane module is contaminated by the supply of the pretreated water contaminated with the microorganisms.

In order to solve this problem, Patent Documents 1 and 2 propose direct feeding of the pretreated water obtained from the pretreatment membrane to the reverse osmosis membrane. This obviates the necessity of providing the raw water tank for the reverse osmosis membrane module that has been conventionally necessary for temporary storage of pretreated water, and accordingly, the contamination of the reverse osmosis membrane by the microorganism is thereby avoided.

In the meanwhile, when the filtration of the raw water by the pretreatment membrane is continued, the materials to be removed by the pretreatment membrane, namely, suspended substances and organic and inorganic substances in the raw water are deposited on the surface of the pretreatment membrane, and this results in the clogging of the pretreatment membrane. This invites an increase in the filtration resistance of the pretreatment membrane, and at some point, continuation of the filtration becomes no longer possible. Accordingly, such an increase in the filtration resistance of the pretreatment membrane should be suppressed by periodically conducting the washing of the pretreatment membrane by causing the water to flow backward from the pretreated water side to the raw water side of the pretreatment membrane. This washing is generally called "backwash", and some pressure is typically applied to the water used for the backwash. The term "back pressure washing" is used when emphasis is laid on such pressure application, and the water used in the back pressure washing is generally called "backwash water" or " back pressure washing water".

As the backwash water, the permeated water that has permeated through the reverse osmosis membrane has been used in some cases. Such use of the permeated water, however, had the drawback of the loss of water yield. In the meanwhile, Patent Documents 1 and 2 propose use of the concentrated water of the reverse osmosis membrane as the backwash water of the pretreatment membrane. Such use of the concentrated water from the reverse osmosis membrane, however, had the problem of the precipitation of scaling substances such as calcium carbonate and sulfuric acid calcium, causing an increase in the pressure during the operation of the pretreatment membrane. Furthermore, a part of the pretreated water temporarily stored in the tank for use in the reverse osmosis membrane module may also be used for the backwash water as shown in Fig. 4 of Patent Document 1 or Fig. 2 of Patent Document 2. As the pretreated water stored in the tank for the reverse osmosis membrane module is also supplied to the reverse osmosis membrane, it use has been associated with the problem of the contamination of the reverse osmosis membrane with microorganisms as described above.

### Prior Art Documents

### Patent Documents

Patent Document 1: JP10-263539A
Patent Document 2: JP2007-181822A

### Summary of Invention

### Technical Problem

An object of the invention is to provide a membrane filtration method and a membrane filtration device wherein raw water is filtered through a pretreatment membrane module having a filtration membrane such as a microfiltration membrane, a ultrafiltration membrane, or both, and further treating resulting pretreated water in a reverse osmosis membrane module having a reverse osmosis membrane to thereby obtain permeated water and concentrated water, and wherein the problems of the prior art as described above are obviated and the pressure increase in the operation of the pretreatment membrane module is prevented.

### Solution to Problem

A membrane filtration method of the invention for realizing the object of the invention is as described below.

A membrane filtration method for use in a water treatment system comprising at least one pretreatment membrane module having a filtration membrane for filtrating raw water, and at least one reverse osmosis membrane module having a reverse osmosis membrane for filtrating pretreated water obtained from the pretreatment membrane module, wherein the raw water is supplied to the pretreatment membrane module in which the raw water is separated into the pretreated water and concentrated water by the filtration membrane, and the pretreated water obtained is supplied to the reverse osmosis membrane module in which the pretreated water is separated into permeated water and concentrated water by the reverse osmosis membrane, and wherein
(a) a communicating conduit directly joining an outlet of the pretreated water in the pretreatment membrane module and an inlet of the pretreated water in the reverse osmosis membrane module is provided, and a branch conduit diverting a part of the pretreated water flowing in the communicating conduit from the communicating conduit is provided; and either
(b1) the downstream end of the branch conduit is connected to the pretreatment membrane module via a pretreated water reservoir tank storing the pretreated water provided in the middle of the branch conduit, and a backwash of the filtration membrane of the pretreatment membrane module requiring the backwash of the filtration membrane is conducted by the pretreated water flowing out from the pretreated water reservoir tank and flowing in the branch conduit, or
(b2) the downstream end of the branch conduit is directly connected to the pretreatment membrane module, and a backwash of the filtration membrane of the pretreatment membrane module requiring the backwash of the filtration membrane is conducted by the pretreated water flowing in the branch conduit.

In the membrane filtration method, a part of the pretreated water in the pretreated water reservoir tank may be circulated back to the raw water for use as a part of the raw water.

The membrane filtration device for realizing the object of the invention is as described below.

A membrane filtration device for use in a water treatment system comprising a raw water storage tank, at least one pretreatment membrane module having a filtration membrane for filtrating raw water supplied from the raw water storage tank, and at least one reverse osmosis membrane module having a reverse osmosis membrane for filtrating pretreated water obtained from the pretreatment membrane module, wherein the raw water is supplied to the pretreatment membrane module in which the raw water is separated into the pretreated water and concentrated water by the filtration membrane, and the pretreated water obtained is supplied to the reverse osmosis membrane module in which the pretreated water is separated into permeated water and concentrated water by the reverse osmosis membrane, and wherein
(a) a communicating conduit directly joining an outlet of the pretreated water in the pretreatment membrane module and an inlet of the pretreated water in the reverse osmosis membrane module is provided, and a branch conduit diverting a part of the pretreated water flowing in the communicating conduit from the communicating conduit is provided; and either
(b1) the downstream end of the branch conduit is connected to the communication conduit which is connected to the outlet of the pretreated water in the pretreatment membrane module, via a pretreated water reservoir tank storing the pretreated water provided in the middle of the branch conduit, and a backwash of the filtration membrane of the pretreatment membrane module requiring the backwash of the filtration membrane is conducted by the pretreated water flowing out from the pretreated water reservoir tank and flowing in the branch conduit, or
(b2) the downstream end of the branch conduit is directly connected to the communication conduit which is connected to the outlet of the pretreated water in the pretreatment membrane module, and a backwash of the filtration membrane of the pretreatment membrane module requiring the backwash of the filtration membrane is conducted by the pretreated water flowing in the branch conduit.

In the membrane filtration device, a part of the pretreated water stored in the pretreated water reservoir tank may be circulated back to the raw water reservoir tank. Advantageous Effects of Invention

In the membrane filtration method and the membrane filtration device of the invention, a communicating conduit directly connecting the outlet of the pretreated water of the pretreatment membrane module and the inlet of the pretreated water of the reverse osmosis membrane module is provided; and the communicating conduit has a branch conduit for directing a part of the pretreated water away from the communicating conduit so that the backwash of the filtration membrane of the pretreatment membrane module requiring the backwash of the filtration membrane can be conducted with the pretreated water in the branch conduit directed from the communicating conduit.

Accordingly, the pretreated water supplied to the reverse osmosis membrane module is directly supplied by the communicating conduit from the pretreatment membrane module to the reverse osmosis membrane module, and the pretreated water is not temporarily stored in the reservoir tank as in the case of conventional water treatment. As a consequence, a membrane filtration method and a membrane filtration device which have obviated the contamination problem of the reverse osmosis membrane module by the microorganisms as described above are provided.

In addition, since the backwash of the filtration membrane of the pretreatment membrane module is conducted by the pretreated water directed by the branch conduit from the communicating conduit, the membrane filtration method and the membrane filtration device provided are free from the problems associated with the conventional backwash of the filtration module of the pretreatment membrane module using the permeated water or the concentrated water of the reverse osmosis membrane module.

### Brief Description of Drawings

Fig. 1 is a side schematic flow diagram of the membrane filtration device according to an embodiment of the invention wherein the components are connected by pipe lines.
Fig. 2 is a front schematic flow diagram of the membrane filtration device according to another embodiment of the invention wherein the components are connected by pipe lines.
Fig. 3 is a side schematic flow diagram of a conventional membrane filtration device wherein the components are connected by pipe lines.

### Description of Embodiments

Next, embodiments of the invention are described by referring to the drawings. The invention is not limited to the following embodiments. The basic technical concept of the invention includes that a communicating conduit directly connecting the pretreated water outlet of the pretreatment membrane module and the pretreated water inlet of the reverse osmosis membrane module is provided to send the pretreated water; that a branched conduit is provided for directing a part of the pretreated water flowing in the communicating conduit toward the pretreated water inlet of the reverse osmosis membrane module, away from the communicating conduit; and that backwash of the filtration membrane in the pretreatment membrane module requiring backwash of the filtration membrane is conducted by using the pretreated water flowing through the branch conduit.

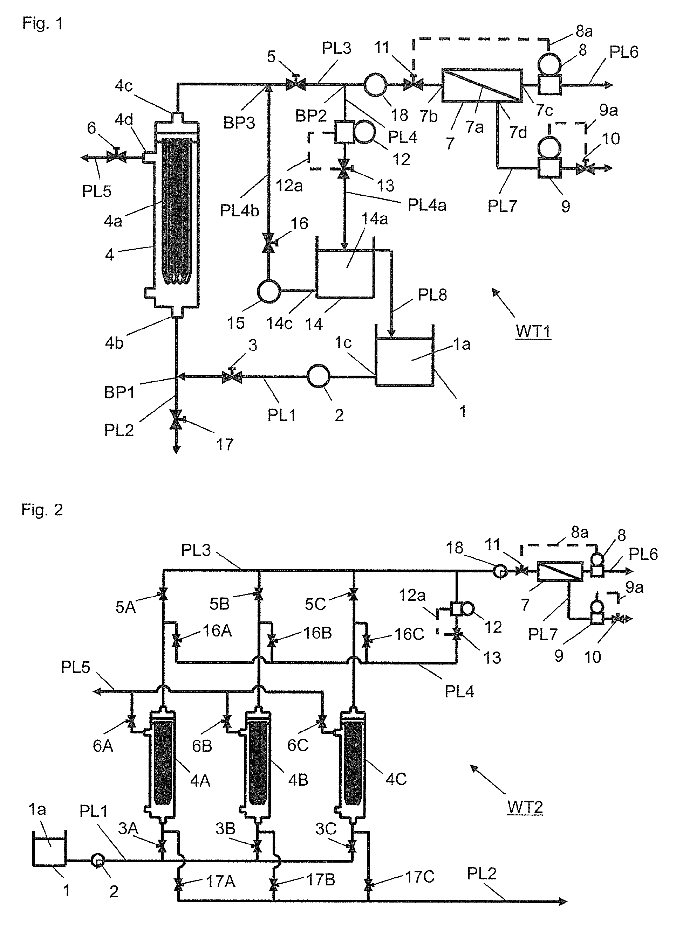

Fig. 1 is a side schematic flow diagram of the membrane filtration device according to an embodiment of the invention wherein the components are connected by pipe lines. In Fig. 1, a water treatment system WT1 has a raw water reservoir tank 1, a pretreatment membrane module 4, and a reverse osmosis membrane module 7.

Raw water 1a is reserved in the raw water reservoir tank 1, and the raw water reservoir tank 1 has a raw water outlet 1c at one end (at the bottom left in Fig. 1). A raw water feeding pipe line (not shown) is connected to the raw water reservoir tank 1 to continuously or intermittently supply the raw water from the exterior to the raw water reservoir tank 1.

The pretreatment membrane module 4 has a filtration membrane 4a (for example, a microfiltration membrane, an ultrafiltration membrane, or both of these filtration membranes) in its interior for raw water filtration and separation into pretreated water and concentrated water. The pretreatment membrane module 4 has a raw water inlet 4b at one end (at the lower end in Fig. 1) and a pretreated water outlet 4c at another end (at the upper end in Fig. 1), and also a concentrated water outlet 4d on another end (at the upper end of the peripheral surface on the left side in Fig. 1).

The reverse osmosis membrane module 7 has a reverse osmosis membrane 7a in its interior for the filtration of the pretreated water and separation into the permeated water and the concentrated water. The reverse osmosis membrane module 7 has a pretreated water inlet 7b at one end thereof (at the left end in Fig. 1) and a permeated water outlet 7c on another end (at the right end in Fig. 1), and also, a concentrated water outlet 7d on another end (at the lower end of the peripheral surface (on the right side) in Fig. 1).

The raw water outlet 1c of the raw water reservoir tank 1 and the raw water inlet 4b of the pretreatment membrane module 4 are connected by a raw water supply pipe line PL1. The raw water supply pipe line PL1 is provided with a raw water feed pump 2, and a raw water feed valve 3 is provided on the downstream side (on the side of the raw water inlet 4b) thereof. The raw water supply pipe line PL1 also has a pipe line branch point BP1 between the raw water feed valve 3 and the raw water inlet 4b, and a discharge water pipe line PL2 branching therefrom is connected to the pipe line branch point BP1. The discharge water pipe line PL2 has a discharge valve 17.

The pretreated water outlet 4c of the pretreatment membrane module 4 and the pretreated water inlet 7b of the reverse osmosis membrane module 7 are connected by a communicating conduit PL3 in which the pretreated water flows. The communicating conduit PL3 has a filter valve 5, a booster pump 18, and a water intake rate control valve 11 in this order in the direction from the pretreated water outlet 4c toward the pretreated water inlet 7b.

The communicating conduit PL3 has a pipe line branch point BP2 between the filter valve 5 and the booster pump 18, and a pipe line branch point BP3 between the pretreated water outlet 4c and the filter valve 5. The pipe line branch point BP2 and the pipe line branch point BP3 are connected by a branch conduit PL4 so that the pretreated water can flow from the pipe line branch point BP2 to the pipe line branch point BP3, and the branch conduit PL4 has a pretreated water reservoir tank 14 therebetween.

The downstream end of the first half of the branch conduit PL4, namely, a branch conduit PL4a between the pipe line branch point BP2 and the pretreated water reservoir tank 14, is connected to one end (the upper end in Fig. 1) of the pretreated water reservoir tank 14, so that the pretreated water can be supplied to the pretreated water reservoir tank 14. The pretreated water 14a reserved in the pretreated water reservoir tank 14 is supplied from the communicating conduit PL3 through the branch conduit PL4a and to the pretreated water reservoir tank 14. The branch conduit PL4a is provided with a bypass flowmeter 12 and a bypass flow rate control pipe line 13 in this order in the direction from the pipe line branch point BP2 toward the pretreated water reservoir tank 14. A flow rate control pipe line 12a is provided between the bypass flowmeter 12 and the bypass flow rate control pipe line 13, and the flow rate of the pretreated water supplied to the pretreated water reservoir tank 14 by the bypass flow rate control pipe line 13 can be controlled based on the data obtained by the flowmeter.

A pretreated water outlet 14c is provided at an end (at the lower end (left side) in Fig. 1) of the pretreated water reservoir tank 14, and the pretreated water outlet 14c and the pipe line branch point BP3 is connected by the second half of the branch conduit PL4, namely, a branch conduit PL4b. The branch conduit PL4b is provided with a backwash pump 15 and a backwash valve 16 in this order in the direction from the side of the pretreated water outlet 14c toward the pipe line branch point BP3.

A concentrated water discharging pipe line PL5 is connected to a concentrated water outlet 4d of the pretreatment membrane module 4, and an air discharge valve 6 is provided in the concentrated water discharging pipe line PL5. Since the concentrated water discharging pipe line PL5 is also used in discharging the backwash water, this line is also referred to as a backwash discharging pipe line.

A permeated water outlet pipe line PL6 is connected to a permeated water outlet 7c of the reverse osmosis membrane module 7, and a permeated water flowmeter 8 is provided on the permeated water outlet pipe line PL6. A flow rate control pipe line 8a is provided between the permeated water flowmeter 8 and a water intake rate control valve 11 on the communicating conduit PL3, and the flow rate of the pretreated water supplied to the reverse osmosis membrane module 7 by the water intake rate control valve 11 can be controlled based on the data obtained by the flowmeter.

A concentrated water discharging pipe line PL7 is connected to a concentrated water outlet 7d of the reverse osmosis membrane module 7, and a concentrated water flowmeter 9 and a concentrated water flow rate control valve 10 are provided on the concentrated water discharging pipe line PL7 in this order in the direction toward the discharge of the concentrated water. A flow rate control pipe line 9a is provided between the concentrated water flowmeter 9 and the concentrated water flow rate control valve 10, and the flow rate of the concentrated water discharged from the reverse osmosis membrane module 7 can be controlled by the concentrated water flow rate control valve 10 based on the data obtained by the flowmeter.

The raw water feed valve 3 in the raw water supply pipe line PL1 is in the "open" position when the raw water is supplied from the raw water reservoir tank 1 to the pretreatment membrane module 4. The discharge valve (air vent valve) 6 in the concentrated water discharging pipe line PL5 is in the "open" position when the filtration membrane 4a is washed by reverse pressure washing or air washing. The backwash valve 16 in the branch conduit PL4b is in the "open" position when back pressure washing of the filtration membrane 4a is conducted. The discharge valve 17 in the discharge water pipe line PL2 is in the "open" position when water on the raw water side of the pretreatment membrane module 4 is discharged.

In the water treatment system WT1, the pretreated water side (pretreated water outlet 4c) of the pretreatment membrane module 4 and the water intake side (pretreatment 7b) of the reverse osmosis membrane module 7 are directly connected by the communicating conduit PL3, and the branch conduit PL4 (PL4a) starts from the pipe line branch point BP2 in the communicating conduit PL3 with the bypass water flowmeter 12 and the bypass water flow rate control valve 13 provided on the branch conduit PL4a. A constant flow rate of the pretreated water flowing through the branch conduit PL4a is realized by adjusting the extent of opening of the bypass water flow rate control valve 13 by mean of the flow rate control pipe line 12a depending on the value of the flow rate of the pretreated water detected by the bypass water flowmeter 12.

The outlet (the downstream end) of the branch conduit PL4a, namely, the first half of the branch conduit PL4, is connected to the pretreatment membrane backwash water reservoir tank (the pretreated water reservoir tank) 14, and the pretreated water flowing through the branch conduit PL4a is stored in the pretreatment membrane backwash water reservoir tank 14. The branch conduit PL4b, namely, the second half of the branch conduit PL4 connected to the pretreated water outlet 14c of the reservoir tank 14 for the backwash of the pretreatment membrane is provided with a backwash pump 15. The ejection side of the backwash pump 15 is connected to the pretreated water side of the pretreatment membrane module 4 (the pretreated water outlet 4c) through the branch conduit PL4b, the pipe line branch point BP3, and the communicating conduit PL3. This arrangement enables supply of the pretreated water stored in the pretreatment membrane backwash water reservoir tank 14 to the pretreated water side of the pretreatment membrane module (the pretreated water outlet 4c) and backwash of the filtration membrane 4a of the pretreatment membrane module 4 by the thus supplied pretreated water.

The water treatment system WT1 of Fig. 1 has a plurality of independent pretreatment membrane modules which are arranged in parallel manner while such arrangement is not shown in Fig. 1 which is a side elevational view. Of the plurality of pretreatment membrane modules in the water treatment system WT1, Fig. 1 shows the pretreatment membrane module 4 at the front end. With regard to the reverse osmosis membrane module 7 shown in Fig. 1, the downstream end of all of the communicating conduits extending from the plurality of pretreatment membrane modules may be connected to this reverse osmosis membrane module 7, or alternatively, a plurality of reverse osmosis membrane module 7 not shown in Fig. 1 corresponding to each of the plurality of the pretreatment membrane module may be provided.

The backwash of the filtration membrane 4a of the pretreatment membrane module 4 which needs the backwash can be accomplished while the filtration of the raw water is continued by a part of the pretreatment membrane modules of the plurality of pretreatment membrane modules, namely, while the filtration process is continued, by stopping the filtration process of other pretreatment membrane module which needs the backwash, for example, the pretreatment membrane module 4 and introducing the pretreated water stored in the pretreatment membrane backwash water reservoir tank 14 for the backwash of the pretreatment membrane into the side of the pretreated water of the pretreatment membrane module 4.

Also, the pretreatment membrane backwash water reservoir tank 14 and the raw water reservoir tank 1 may be connected by a circulating pipe line PL8 so that a part of the pretreated water stored in the pretreatment membrane backwash water reservoir tank 14 can be circulated back to the raw water reservoir tank 1. Provision of the circulating pipe line PL8 enables efficient use of the unused pretreated water as the raw water and the water recycle rate of the water treatment system WT1 is thereby improved.

Next, the raw water treatment by the water treatment system WT1 shown in Fig. 1 is described.

The raw water 1 a stored in the raw water reservoir tank 1 is supplied to the raw water side of the pretreatment membrane module 4 from the raw water inlet 4b after the opening of the raw water feed valve 3 in the raw water supply pipe line PL1 by the raw water feed pump 2. The air trapped in the raw water side of the pretreatment membrane module 4 is discharged from the air vent valve 6 by opening the air vent valve 6, and after the completion of air discharge, the air vent valve 6 is closed and the filter valve 5 of the communicating conduit PL3 is opened.

The pretreated water of the pretreatment membrane module 4 flows out from the pretreated water outlet 4c into the communicating conduit PL3, and supplied to the water intake side of the reverse osmosis membrane module 7 from the pretreatment inlet 7b. With regard to the pretreated water supplied to the reverse osmosis membrane module 7, a part of the pretreated water permeates through the reverse osmosis membrane 7a of the reverse osmosis membrane module 7 to become the permeated water, and the remainder is concentrated water of the osmosis membrane in which the dissolved salt contents and the like are concentrated.

Flow rate of the concentrated water flowing in the concentrated water discharging pipe line PL7 from the concentrated water outlet 7d is regulated by the flow rate control pipe line 9a depending on the degree of openness of the concentrated water flow rate control valve 10.

Flow rate of the permeated water flowing from the permeated water outlet 7c through the permeated water outlet pipe line PL6 is regulated by adjusting the degree of openness of the water intake rate control valve 11, namely, by adjusting the flow rate of the pretreated water flowing into the reverse osmosis membrane module 7 from the communicating conduit PL3 through the pretreated water inlet 7b (the flow rate at the inlet of the reverse osmosis membrane module 7) by the flow rate control pipe line 8a depending on the value of the flow rate detected by the permeated water flowmeter 8.

The back pressure washing of the filtration membrane 4a of the pretreatment membrane module 4 regularly conducted in order to suppress the increase of the filtration resistance is carried out by the procedure as described below. The water treatment system WT1 of Fig. 1 has a plurality of independent pretreatment membrane modules which are arranged in parallel manner while such arrangement is not shown in Fig. 1 which is a side lavational view. Of the plurality of pretreatment membrane modules in the water treatment system WT1, Fig. 1 shows the pretreatment membrane module 4 at the front end.

If the pretreatment membrane module requiring the back pressure washing is the pretreatment membrane module 4 shown in Fig. 1 and the raw water filtration of one pretreatment membrane module not shown in Fig. 1 is to be continued, the raw water feed valve 3 and the filter valve 5 of the pretreatment membrane module 4 requiring the back pressure washing are closed to thereby stop the raw water filtration by the pretreatment membrane module 4.

Next, the air vent valve 6 of the concentrated water discharging pipe line PL5 and the backwash valve 16 of the branch conduit PL4b are opened, and the backwash pump 15 of the branch conduit PL4b is operated, and the pretreated water stored in the reservoir tank 14 for the backwash of the pretreatment membrane is supplied through the branch conduit PL4b, the pipe line branch point BP3, the communicating conduit PL3, and the pretreated water outlet 4c to the side of the pretreated water side of the pretreatment membrane module 4.

The backwash water (pretreated water) which permeated through the pretreatment membrane (filtration membrane) 4a in the direction opposite to the filtration process passes through the air vent valve 6 which is open, and the backwash water is discharged through the concentrated water discharging pipe line PL5 as a discharge water of the washing. This step is called back pressure washing step. After operating the back pressure washing step for a predetermined time, operation of the backwash pump 15 is stopped and the backwash valve 16 is closed.

Simultaneously with the operation or after the stopping the operation of the back pressure washing step, air washing step of the pretreatment membrane (filtration membrane) 4a may be conducted by supplying pressurized air (not shown) under the pretreatment membrane module 4 and oscillating the pretreatment membrane (filtration membrane) 4a.

When the backwash of the filtration membrane 4a of the pretreatment membrane module 4 is completed, the discharge valve 17 is opened, and the backwash water remaining on the raw water side of the pretreatment membrane module 4 is discharged to thereby complete the entire backwash step of the pretreatment membrane module 4 requiring backwash.

Next, the raw water feed valve 3 is opened to supply the raw water to the pretreatment membrane module 4 which has completed its backwash. The air that had been trapped on the raw water side of the pretreatment membrane module 4 is discharged from the air vent valve 6 that is open. In this step, flushing may be conducted to thereby discharge the washing discharge water retained on the raw water side of the pretreatment membrane module 4 through the air vent valve 6. In the flushing, the washing discharge water may or may not be discharged from the discharge valve 17.

After completing the discharge of the air from the air vent valve 6, the air vent valve 6 is closed and the filter valve 5 is opened so that the pretreatment membrane module 4 which has completed its backwash returns to the raw water filtration step as in the case of other pretreatment membrane modules.

When the pretreated water 14a stored in the pretreatment membrane backwash water reservoir tank 14 is insufficient in this backwash stage, backwash time of the pretreatment membrane module 4 will be insufficient, and the effect of the backwash will also be insufficient, and this may invite increase in the filtration resistance of the pretreatment membrane module 4, and in such instance, production of the permeated water by the reverse osmosis membrane module 7 had to be partly or entirely stopped. Accordingly, the amount of the pretreated water stored in the pretreatment membrane backwash water reservoir tank 14 should be an amount corresponding to the amount of the pretreated water required for the backwash.

When the pretreated water for the backwash is insufficient, pipe lines may be arranged to enable use of the pretreated water stored in the pretreated water reservoir tank in another line of the pretreatment membrane module for the backwash and use the pretreated water in the pretreated water reservoir tank of another line. However incorporation of such backwash arrangement is not preferable since such incorporation results in the complicated handling of the water treatment system WT1, and such incorporation may also invite loss of the efficiency in the production of the permeated water by the reverse osmosis membrane module which is the final object of the water treatment system WT1.

In the meanwhile, provision of the circulating pipe line PL8 for circulating the pretreated water remaining in the pretreated water reservoir tank 14 remaining after the backwash step to the raw water side of the pretreatment membrane, namely, to the raw water reservoir tank 1 between the pretreated water reservoir tank 14 and the raw water reservoir tank 1 is preferable so that the pretreated water remaining in the pretreated water reservoir tank 14 can be used as the raw water. When the amount of the pretreated water is in excess of the storage volume of the pretreated water reservoir tank 14, this circulating pipe line PL8 can also be used for circulating the excessive pretreated water in the pretreated water reservoir tank 14 to the raw water reservoir tank 1 while continuing the filtration operation of the pretreatment membrane module. This enables reduction in the amount of the pretreated water that is not used in the system to thereby improve the yield of the water in the water treatment system WT1.

While the water treatment system WT1 as described above has a plurality of pretreatment membrane modules, the water treatment system WT1 having single pretreatment membrane module is also within the scope of the invention. In this case, the step of producing the permeated water by single line comprising the pretreatment membrane module 4 and the reverse osmosis membrane module 7, namely, the filtration step needs to be stopped before starting the backwash step, and the backwash of the filtration membrane 4a of the pretreatment membrane module 4 is conducted by the pretreated water that had been stored in the pretreated water reservoir tank 14 during the filtration step.

While this embodiment is surely the embodiment within the scope of the invention, such embodiment requiring the complete stop of the filtration step during the backwash step is not preferable since the efficiency of producing the permeated water by the water treatment system is markedly inferior compared to the water treatment system WT1 having a plurality of pretreatment membrane modules wherein the filtration by another pretreatment membrane module can be continued while the backwash step is conducted in a particular pretreatment membrane module.

Next, the membrane filtration method and the membrane filtration device according to another embodiment of the invention are described by referring to Fig. 2. The amount of the backwash water (pretreated water) supplied to the pretreatment membrane module requiring the backwash and the time of the backwashing will be limited in this embodiment.

Fig. 2 is a schematic front flow diagram of the membrane filtration device according to another embodiment of the invention wherein the components are connected by pipe lines. In Fig. 2, a water treatment system WT2 comprises one raw water reservoir tank 1, three pretreatment membrane modules 4A, 4B, and 4C for conducting the filtration of raw water 1a supplied from the raw water reservoir tank 1, and one reverse osmosis membrane module 7 for conducting the filtration of pretreated water obtained from each of the pretreatment membrane modules 4A, 4B, and 4C.

The raw water reservoir tank 1 and each of the pretreatment membrane modules 4A, 4B, and 4C are connected by a raw water supply pipe line PL1. The raw water supply pipe line PL1 is provided with one raw water feed pump 2 and raw water feed valves 3A, 3B, and 3C corresponding to each of the pretreatment membrane modules 4A, 4B, and 4C. The raw water supply pipe line PL1 is provided with a discharge water pipe line PL2 branching between the raw water feed valve 3A, 3B, or 3C and the pretreatment membrane module 4A, 4B, or 4C. The discharge water pipe line PL2 is provided with discharge valves 17A, 17B, and 17C respectively corresponding to each of the pretreatment membrane modules 4A, 4B, and 4C.

Each of the pretreatment membrane modules 4A, 4B, and 4C and a reverse osmosis membrane module 7 are connected by a communicating conduit PL3. The communicating conduit PL3 is provided with filter valves 5A, 5B, and 5C respectively corresponding to the pretreatment membrane modules 4A, 4B, and 4C, one booster pump 18 in the downstream, and a water intake rate control valve 11 in further downstream.

The communicating conduit PL3 is connected to the branch conduit PL4 branching at a position between the filter valve 5A, 5B, or 5C and the booster pump 18. The downstream end of the branch conduit PL4 is connected to the communicating conduit PL3 at a position between the pretreatment membrane module 4A, 4B, or 4C and the filter valve 5A, 5B, or 5C. The branch conduit PL4 is provided with one bypass flowmeter 12, one bypass flow rate control pipe line 13, and a backwash valve 16A, 16B, or 16C corresponding to each of the pretreatment membrane modules 4A, 4B, and 4C in this order from the upstream to the downstream. A flow rate control pipe line 12a is provided between the bypass flowmeter 12 and the bypass flow rate control pipe line 13, and the flow rate of the pretreated water can be controlled by the bypass flow rate control pipe line 13 based on the data obtained by the flowmeter.

The pretreatment membrane modules 4A, 4B, and 4C have a backwash discharging pipe line PL5 connected thereto, and the backwash discharging pipes line PL5 have a discharge valve 6A, 6B, or 6C corresponding to each of the pretreatment membrane modules 4A, 4B, and 4C.

A permeated water outlet pipe line PL6 is connected to the reverse osmosis membrane module 7, and a permeated water flowmeter 8 is provided on the permeated water outlet pipe line PL6. A flow rate control pipe line 8a is provided between the permeated water flowmeter 8 and the water intake rate control valve 11 on the communicating conduit PL3, and the flow rate of the pretreated water supplied to the reverse osmosis membrane module 7 by the water intake rate control valve 11 can be controlled based on the data obtained by the flowmeter.

A concentrated water discharging pipe line PL7 is connected to the reverse osmosis membrane module 7, and a concentrated water flowmeter 9 and a concentrated water flow rate control valve 10 are provided on the concentrated water discharging pipe line PL7 in this order in the direction of the discharging of the concentrated water. A flow rate control pipe line 9a is provided between the concentrated water flowmeter 9 and the concentrated water flow rate control valve 10, and flow rate of the concentrated water discharged from the reverse osmosis membrane module 7 can be controlled by the concentrated water flow rate control valve 10 based on the data obtained by the flowmeter.

While the water treatment system WT2 is provided with three pretreatment membrane modules 4A, 4B, and 4C, the number of the pretreatment membrane modules may be 2 or 4 or more as desired. If desired, two or more raw water reservoir tanks and reverse osmosis membrane modules may be provided. The components may be connected by pipelines by referring the way how the components are connected in the water treatment system WT2 in view of the purpose and function of each component as described below.

The water treatment system WT2 shown in Fig. 2 is different from the water treatment system WT1 shown in Fig. 1 in that the raw water feed valves 3A, 3B, and 3C, the pretreatment membrane modules 4A, 4B, and 4C, the filter valves 5A, 5B, and 5C, the air vent valves 6A, 6B, and 6C, the backwash valves 16A, 16B, and 16C, and the discharge valves 17A, 17B, and 17C are provided in parallel manner; and that the downstream ends respectively corresponding to the pretreatment membrane module 4A, 4B, and 4C of the branch conduit branching from the communicating conduit connecting the pretreated water side of the pretreatment membrane module and the inlet side of the reverse osmosis membrane module are directly connected to the pretreated water side of the pretreatment membrane modules 4A, 4B, and 4C with the intervening backwash valves 16A, 16B, and 16C. This arrangement has enabled omission the pretreatment membrane backwash water reservoir tank 14 and the backwash pump 15 in the water treatment system WT2.

In the water treatment system WT1 of Fig. 1 and the water treatment system WT2 of Fig. 2, a booster pump 18 is provided on the communicating conduit connecting the pretreated water side of the pretreatment membrane module 4 and the inlet side of the reverse osmosis membrane module 7. However, when the pressure resistance of the pretreatment membrane module 4 is higher than the sum of the supply pressure of the reverse osmosis membrane module 7 and the transmembrane differential pressure of the pretreatment membrane module 4, the booster pump 18 may be omitted by applying the pressure of the supplying pressure required in the reverse osmosis membrane module 7 plus the transmembrane differential pressure of pretreatment membrane module 4 with the raw water feed pump 2.

Next, the back pressure washing process in the water treatment system WT2 shown in Fig. 2 is described for the case where the back pressure washing is regularly conducted to prevent increase in the filtration resistance in the pretreatment membrane module 4.

While a part of the pretreatment membrane modules (provisionally pretreatment membrane modules 4A and 4B) are continuing filtration of the raw water, filtration of the remaining pretreatment membrane module (provisionally pretreatment membrane module 4C) which should be subjected to the back pressure washing is stopped by closing the raw water feed valve 3C and the filter valve 5C, and the air vent valve 6C and the backwash valve 16C are opened to thereby supply a part of the pretreated water to the pretreated water side of the pretreatment membrane module 4C.

Flow rate of the pretreated water in the bypass water flowmeter 12 is constantly adjusted so that this flow rate is the same as the amount of the pretreated water produced by one of the pretreatment membrane module 4A, 4B, and 4C by adjusting the degree of openness of the bypass water flow rate control valve 13.

The backwash water which has permeated through the pretreatment membrane in the direction opposite to the filtration process passes through the air vent valve 6C which is "open", and the backwash water is discharged through the pretreatment membrane module 4C as a discharge water of the washing, and the back pressure washing step of the pretreatment membrane module 4C is thereby started.

After conducting the back pressure washing for a predetermined time, the back pressure washing of the next pretreatment membrane module (provisionally pretreatment membrane module 4A) is started. More specifically, the raw water feed valve 3C and the filter valve 5C are opened simultaneously with the closing of the air vent valve 6C and the backwash valve 16C to start the filtration at the pretreatment membrane module 4C, and simultaneously, the raw water feed valve 3A and the filter valve 5A are closed to stop the filtration at the pretreatment membrane module 4A, and simultaneously, the air vent valve 6A and the backwash valve 16A are opened to thereby supply a part of the pretreated water to the pretreated water side of the pretreatment membrane module 4A.

The backwash water which has permeated through the pretreatment membrane in the direction opposite to the filtration process passes through the air vent valve 6A which is "open", and the backwash water is discharged through the pretreatment membrane module 4A as a discharge water of the washing, and the back pressure washing step of the pretreatment membrane module 4A is thereby started.

After conducting the back pressure washing of the pretreatment membrane module 4A for a predetermined time, the back pressure washing of the next pretreatment membrane module 4B is started in a similar manner, and after similarly conducting the back pressure washing for a predetermined time, the back pressure washing of the first pretreatment membrane module 4C is started. All pretreatment membrane modules will be periodically subjected to the back pressure washing by repeating these steps.

Simultaneously with this backwash, air washing step may be conducted by supplying pressurized air (not shown) under the pretreatment membrane module and oscillating the pretreatment membrane.

As described above, the system having three pretreatment membrane modules has been described for the case when the amount of water for the backwash supplied to the pretreated water side of the pretreatment membrane module is the same as the amount of the pretreated water treated in one pretreatment membrane module. However, the amount of water for the backwash can be changed by providing 4 or more pretreatment membrane modules. For example, when four pretreatment membrane modules are provided, amount of water used for the backwash can be selected from the amount corresponding to one pretreatment membrane module or two pretreatment membrane modules when the number of pretreatment membrane modules simultaneously subjected to the back pressure washing step is one, and when the of pretreatment membrane modules simultaneously subjected to the back pressure washing step is two, the amount of water used for the backwash supplied to one pretreatment membrane module may be selected from the amount corresponding to one or half pretreatment membrane module. The choice for the amount of water used for the backwash can be similarly increased by increasing the number of pretreatment membrane modules.

Furthermore, when the back pressure washing of two or more pretreatment membrane modules should be simultaneously conducted, at least one pretreatment membrane module can be stopped, and therefore, the step of air washing can be incorporated before or after the backwash, or, by opening the discharge valve after the backwash, the water discharged in the backwash step that had been retained in the raw water side of the pretreatment membrane module can be discharged from the pretreatment membrane module. In addition, the air that had been trapped on the raw water side of the pretreatment membrane module in the process of supplying the raw water may be discharged from the air vent valve, or a flushing step may also be incorporated in this step to thereby discharge the washing discharge water that had been retained on the raw water side of the pretreatment membrane module through the air vent valve.

In the backwash step, it is also preferable to conduct the backwash by adding an oxidizing agent, or the backwash by adding an oxidizing agent continuously followed by the immersion of the raw water side of the pretreatment membrane module in the backwash water having an oxidizing agent for a predetermined time, and such treatment may be conducted every time or once in several times in view of suppressing the increase in the filtration resistance of the pretreatment membrane.

The filtration membrane (pretreatment membrane) 4a used in the pretreatment membrane module is not particularly limited as long as the membrane is a microfiltration membrane capable of blocking the particles of at least 0.1 µm and polymers, a ultrafiltration membrane capable of blocking the particles of at least 2 nm and less than 0.1 µm, or a filtration membrane having equivalent properties. Exemplary forms of the microfiltration membrane and the ultrafiltration membrane used in the pretreatment membrane module include hollow fiber membrane, sheet, spiral, and tubular type membranes, and the preferred is the hollow fiber membrane in view of reducing the cost.

The membrane filtration process employed may be either dead-end filtration or crossflow filtration process, and preferably, a dead-end filtration module is used in view of less energy consumption. In addition, the module used may be either pressure type module or an immersion type module, and the preferred is the pressure type module because of the capability of the operation at a higher flux. The module used may be either an external pressure type wherein the raw water is supplied from the exterior of the membrane and the permeated water is obtained from the interior of the membrane or an internal pressure type wherein the raw water is supplied from the interior of the membrane and the permeated water is obtained from the interior of the membrane. The preferred is the use of an external pressure in view of the ease of the pretreatment.

The material used for the filtration membrane (pretreatment membrane) is not particularly limited. Exemplary materials used for the filtration membrane include polysulfone, polyether sulfone, polyacrylonitrile, polyimide, polyetherimide, polyamide, polyetherketone, polyether ether ketone, polyethylene, polypropylene, ethylene - vinyl alcohol copolymer, cellulose, acetic acid cellulose, polyvinylidene fluoride, ethylene - tetrafluoroethylene copolymer, polytetrafluoroethylene, and composite materials thereof. Among these, polyvinylidene fluoride is particularly preferable as a material of the pretreatment membrane in view of its excellent chemical resistance since the pretreatment membrane can be regularly washed with a chemical reagent to restore its filtration function, and this results in the long life of the pretreatment membrane module.

Exemplary materials used for the casing of the pretreatment membrane module accommodating the filtration membrane (pretreatment membrane) include polyolefins such as polyethylene, polypropylene, and polybutene, fluororesins such as polytetrafluoroethylene (PTFE), tetrafluoroethylene - perfluoroalkyl vinyl ether copolymer (PFA), fluoroethylene polypropylene copolymer (FEP), ethylene tetrafluoroethylene copolymer (ETFE), polychlorotrifluoroethylene (PCTFE), trifluorochloroethylene - ethylene copolymer (ECTFE), and polyfluorovinylidene (PVDF), chlororesins such as polyvinyl chloride and polyvinylidene chloride, and also, polysulfone resin, polyether resin, polyarylsulfone resin, polyphenyl ether resin, acrylonitrile - butadiene - styrene copolymer resin (ABS), acrylonitrile-styrene copolymer resin, polyphenylene sulfide resin, polyamide resin, polycarbonate resin, polyetherketone resin, and polyether ether ketone resin, which may be used alone or as a mixture. Preferable materials other than resins include aluminum and stainless steel as well as composite of resin and metal, and composite materials such as glass fiber reinforced resin and carbon fiber reinforced resin.

The reverse osmosis membrane module may be a spiral type element wherein the membrane sheets are wound around the water collection tube; a plate-and-frame type element wherein the support plate having the membrane sheets adhered on opposite surfaces are arranged at a regular interval with the intervening spacer; tubular element prepared by using membrane tubes; or hollow fiber membrane element prepared by accommodating the bundle of hollow fiber membranes in the casing. The element may be used alone or by serially connecting two or more elements, and the elements are accommodated in the casing.

The form of the element is not limited. The element, however, is preferably a spiral type element in view of the handling convenience and interchangeability. The number of elements may be adequately selected depending on the performance of the membrane. In the case of the spiral type element, serially arranged 1 to about 8 elements may preferably be accommodated in one module. It is also possible to provide two or more reverse osmosis membrane modules 7 in parallel arrangement.

The reverse osmosis membrane constituting the reverse osmosis membrane module is not particularly limited as long as it has desalination performance. Exemplary materials of the membrane include polyamide, polypiperazine amide, and polyester amide resins and, crosslinked water-soluble vinyl polymer.

Exemplary membrane structures include those wherein a compact layer is formed on at least one surface of the membrane, and minute pores are provided in the compact layer, the membrane, and in some case, also in the membrane on the other side with the pore size gradually increasing in this order (asymmetric membrane), and those wherein a very thin separation functional layer comprising a different material is formed on the compact layer of the asymmetric membrane (composite membrane).

However, the membrane is preferably a composite membrane for increasing the amount of water treated. The preferred is polyamide composite membrane in view of chemical resistance, amount of water permeated, and the like, and also preferred is piperazine polyamide composite membrane.

### Example 1

Two external pressure PVDF hollow fiber membrane modules HFU-2020 (manufactured by Toray Industries, Inc.) were arranged in parallel manner. Of these two modules, one was the pretreatment membrane module 4 shown in Fig. 1, and the other is not shown in Fig. 1. The reverse osmosis membrane module 7 had six spiral type reverse osmosis membrane elements SU-810 (manufactured by Toray Industries, Inc.) accommodated in serial manner. The water treatment system WT1 shown in Fig. 1 was constituted by using these modules, and the experiments were conducted under the following conditions.

Raw water used was sea water, and both the pretreatment membrane module 4 and the other pretreatment membrane module were dead-end filtration modules. After conducting the filtration for 30 minutes, the two pretreatment membrane modules were alternately washed one by one by conducting the washing in the order of washing at back pressure and at a constant flow rate of 75 L/min for 30 seconds, washing with air for 30 seconds, discharging all water in the pretreatment membrane module on the side of the raw water, and filling the pretreatment membrane module on the side of the raw water with the raw water, and then the membrane filtration was resumed. These steps of washing and membrane filtration were repeated. The pretreated water from the pretreatment membrane module was diverted through the branch conduit at a constant flow rate of 150 L/h, and stored in the pretreatment membrane backwash water reservoir tank 14. Overflow of the pretreated water from the pretreatment membrane backwash water reservoir tank 14 was sent to the raw water reservoir tank 1. In the meanwhile, the reverse osmosis membrane module 7 was operated at a constant flow rate of the permeated water of 1.4 m³/h and a constant flow rate of the concentrated water of 2.6 m³/h in the reverse osmosis membrane module 7.

In the initial phase of the operation, the transmembrane differential pressure of each module in the pretreatment membrane module was 20 kPa which was corrected to the temperature of 25°C, when both of the two pretreatment membrane modules were in the filtration step. After one month of operation, the transmembrane differential pressure of each module in the pretreatment membrane module was 40 kPa which was corrected to the temperature of 25°C. A lower differential pressure is preferable since increase in the filtration resistance of the pretreatment membrane module is suppressed at the lower differential pressure. Shortage of the backwash water for the pretreatment membrane module did not occur, and the reverse osmosis membrane module 7 could be continuously operated for one month.

### Comparative Example 1

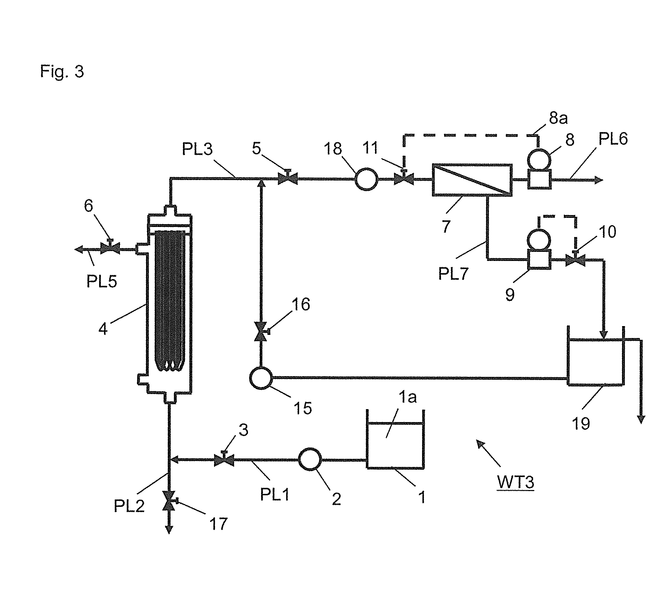

Two external pressure PVDF hollow fiber membrane modules HFU-2020 (manufactured by Toray Industries, Inc.) were arranged in parallel manner for use as two pretreatment membrane modules. The reverse osmosis membrane module having six spiral type reverse osmosis membrane elements SU-810 (manufactured by Toray Industries, Inc.) arranged in serial manner was prepared. A conventional water treatment system WT3 shown in Fig. 3 was constituted by using these modules.

The conventional water treatment system WT3 shown in Fig. 3 was the same as the water treatment system WT1 shown in Fig. 1 except that the water treatment system WT3 had a reverse osmosis membrane concentrated water reservoir tank 19 for storing the concentrated water of the reverse osmosis membrane module 7, and backwash water supplied to the backwash pump 15 was reverse osmosis membrane concentrated water, and that, while the water treatment system WT3 had the communicating conduit PL3 connecting the pretreated water side of the pretreatment membrane module 4 and the water inlet side of the reverse osmosis membrane module 7 in the water treatment system WT1 shown in Fig. 1, it did not have the branch conduit PL4 branching from the communicating conduit PL3, and accordingly, the water treatment system WT3 did not have the bypass water flowmeter 12 and the bypass water flow rate control valve 13 on the branch conduit PL4. The experiments were conducted by using the conventional water treatment system WT3 shown in Fig. 3 under the following conditions.

Raw water used was sea water, and both the pretreatment membrane module 4 and the other pretreatment membrane module were dead-end filtration modules. After conducting the filtration for 30 minutes, the two pretreatment membrane modules were alternately washed one by one by conducting the washing in the order of washing at back pressure and at a constant flow rate of 75 L/min with the concentrated water from the reverse osmosis membrane module 7 for 30 seconds, washing with air for 30 seconds, discharging all water in the hollow fiber membrane module on the side of the raw water, and filling the hollow fiber membrane module on the side of the raw water with the raw water, and then the membrane filtration was resumed. These steps of washing and membrane filtration were repeated. In the meanwhile, the reverse osmosis membrane module 7 was operated at a constant flow rate of the permeated water of 1.4 m³/h and a constant flow rate of the concentrated water of 2.6 m³/h in the reverse osmosis membrane module 7.

In the initial phase of the operation, the transmembrane differential pressure of each module in the pretreatment membrane module was 20 kPa which was corrected to the temperature of 25°C, when both of the two pretreatment membrane modules were in the filtration step. After one month of operation, the transmembrane differential pressure of each module in the pretreatment membrane module was 120 kPa which was corrected to the temperature of 25°C. This transmembrane differential pressure value was about 3 times that of the transmembrane differential pressure in Example 1, and the backwash of the filtration membrane by using the concentrated water of the reverse osmosis membrane module was demonstrated to be inadequate.

### Industrial Applicability

In the membrane filtration method and the membrane filtration device of the invention, raw water such as river water, underground water, sewage treatment water, sea water, or the like is filtered through a pretreatment membrane module having a filtration membrane such as microfiltration membrane or ultrafiltration membrane to obtain pretreated water, and this pretreated water is supplied to a reverse osmosis membrane module to produce an industrial water, tap water, and the like. In the course of filtration, backwash is carried out to reduce the filtration resistance that has increased by the clogging of the filtration membrane after continuous use of the pretreatment membrane module, and water used in the step of backwash of the filtration membrane is water that has permeated through the pretreatment membrane module, namely, pretreated water.

In particular, when a plurality of pretreatment membrane modules are used, the filtration process can be continued even if one pretreatment membrane module was in the course of backwash since the filtration process can be continued with other pretreatment membrane modules. In other words, the water cleaning process by the reverse osmosis membrane module can be continued while the required backwash procedure is being conducted.

### Reference Signs List

- 1:: raw water reservoir tank
- 1a:: raw water
- 1c:: raw water outlet
- 2:: raw water feed pump
- 3, 3A, 3B, 3C:: raw water feed valve
- 4, 4A, 4B, 4C:: pretreatment membrane module
- 4a:: filtration membrane
- 4b:: raw water inlet
- 4c:: pretreated water outlet
- 4d:: concentrated water outlet
- 5, 5A, 5B, 5C:: filter valve
- 6, 6A, 6B, 6C:: discharge valve (air vent valve)
- 7:: reverse osmosis membrane module
- 7a:: reverse osmosis membrane
- 7b:: pretreated water inlet
- 7c:: permeated water outlet
- 7d:: concentrated water outlet
- 8:: permeated water flowmeter
- 8a:: flow rate control line
- 9:: concentrated water flowmeter
- 9a:: flow rate control line
- 10:: concentrated water flow rate control valve
- 11:: water intake rate control valve
- 12:: bypass flowmeter
- 12a:: flow rate control line
- 13:: bypass flow rate control line
- 14:: pretreated water reservoir tank (pretreatment membrane backwash water reservoir tank)
- 14a:: pretreated water
- 14c:: pretreated water outlet
- 15:: backwash pump
- 16, 16A, 16B, 16C:: backwash valve
- 17, 17A, 17B, and 17C:: discharge valve
- 18:: booster pump
- BP1, BP2, BP3:: branch point
- PL1:: raw water feeding pipe line
- PL2:: discharge water feeding pipe line
- PL3:: communicating conduit
- PL4, PL4a, PL4b:: branch conduit
- PL5:: concentrated water discharging pipe line
- PL6:: permeated water discharging pipe line
- PL7:: concentrated water discharging pipe line
- PL8:: water circulating pipe line
- WT1, WT2, WT3:: water treatment system

## Claims

1. A membrane filtration method for use in a water treatment system comprising at least one pretreatment membrane module having a filtration membrane for filtrating raw water, and at least one reverse osmosis membrane module having a reverse osmosis membrane for filtrating pretreated water obtained from the pretreatment membrane module, wherein the raw water is supplied to the pretreatment membrane module in which the raw water is separated into the pretreated water and concentrated water by the filtration membrane, and the pretreated water obtained is supplied to the reverse osmosis membrane module in which the pretreated water is separated into permeated water and concentrated water by the reverse osmosis membrane, and wherein
(a) a communicating conduit directly joining an outlet of the pretreated water in the pretreatment membrane module and an inlet of the pretreated water in the reverse osmosis membrane module is provided, and a branch conduit diverting a part of the pretreated water flowing in the communicating conduit from the communicating conduit is provided; and either
(b1) the downstream end of the branch conduit is connected to the pretreatment membrane module via a pretreated water reservoir tank storing the pretreated water provided in the middle of the branch conduit, and a backwash of the filtration membrane of the pretreatment membrane module requiring the backwash of the filtration membrane is conducted by the pretreated water flowing out from the pretreated water reservoir tank and flowing in the branch conduit, or
(b2) the downstream end of the branch conduit is directly connected to the pretreatment membrane module, and a backwash of the filtration membrane of the pretreatment membrane module requiring the backwash of the filtration membrane is conducted by the pretreated water flowing in the branch conduit.

2. The membrane filtration method according to claim 1, wherein a part of the pretreated water in the pretreated water reservoir tank is circulated back to the raw water for use as a part of the raw water.

3. A membrane filtration device for use in a water treatment system comprising a raw water storage tank, at least one pretreatment membrane module having a filtration membrane for filtrating raw water supplied from the raw water storage tank, and at least one reverse osmosis membrane module having a reverse osmosis membrane for filtrating pretreated water obtained from the pretreatment membrane module, wherein the raw water is supplied to the pretreatment membrane module in which the raw water is separated into the pretreated water and concentrated water by the filtration membrane, and the pretreated water obtained is supplied to the reverse osmosis membrane module in which the pretreated water is separated into permeated water and concentrated water by the reverse osmosis membrane, and wherein
(a) a communicating conduit directly joining an outlet of the pretreated water in the pretreatment membrane module and an inlet of the pretreated water in the reverse osmosis membrane module is provided, and a branch conduit diverting a part of the pretreated water flowing in the communicating conduit from the communicating conduit is provided; and either
(b1) the downstream end of the branch conduit is connected to the communication conduit which is connected to the outlet of the pretreated water in the pretreatment membrane module, via a pretreated water reservoir tank storing the pretreated water provided in the middle of the branch conduit, and a backwash of the filtration membrane of the pretreatment membrane module requiring the backwash of the filtration membrane is conducted by the pretreated water flowing out from the pretreated water reservoir tank and flowing in the branch conduit, or
(b2) the downstream end of the branch conduit is directly connected to the communication conduit which is connected to the outlet of the pretreated water in the pretreatment membrane module, and a backwash of the filtration membrane of the pretreatment membrane module requiring the backwash of the filtration membrane is conducted by the pretreated water flowing in the branch conduit.

4. The membrane filtration device according to claim 3, wherein a part of the pretreated water stored in the pretreated water reservoir tank is circulated back to the raw water storage tank.
